# EUROPÄISCHE PATENTSCHRIFT

(11) **EP 1 262 223 B1**
(45) Veröffentlichungstag und Bekanntmachung des Hinweises auf die Patenterteilung: **23.11.2005**
(21) Anmeldenummer: 02008438.0
(22) Anmeldetag: 13.04.2002
(51) Int. Cl.: B01D 45/08

(54) **Trägheitsabscheider**
Inertia separator
Separateur a inertie

(30) Priorität: 25.05.2001 DE 10125404
(43) Veröffentlichungstag der Anmeldung: 04.12.2002
(73) Patentinhaber: Mann + Hummel GmbH, 71638 Ludwigsburg (DE)
(72) Erfinder: Neuschwander, Helmut, 71636 Ludwigsburg (DE); Trautmann, Pius, Dr., 70499 Stuttgart (DE)
(74) Vertreter: Voth, Gerhard

(56) Entgegenhaltungen:
- DE-A- 2 720 201
- DE-U- 8 517 835
- DE-U- 9 112 707
- FR-A- 1 056 258
- FR-A- 2 164 984

## Beschreibung

### Stand der Technik

Die Erfindung betrifft einen Trägheitsabscheider nach dem Oberbegriff des Patentanspruches 1. Außerdem betrifft die Erfindung ein Ölmodul nach Patentanspruch 9 und eine Zylinderkopfhaube nach Patentanspruch 10, in welche der o.g. Trägheitsabscheider integriert ist.

Es ist aus der DE 200 04 131 ein Trägheitsabscheider bekannt, welcher zum mechanischen Abscheiden von Flüssigkeiten und oder Feststoffpartikeln aus einem Gasstrom vorgesehen ist. Dieser Trägheitsabscheider besteht aus zwei miteinander zu einem Hohlkörper verbundenen Blechschalen. In diesen Blechschalen sind parallel zueinander in regelmäßigen Abständen Profile angeordnet, wobei die Profile der ersten Blechschale in Richtung der Gasströmung geöffnet sind. Die Profile der zweiten Blechschale sind entgegen der Gasströmung geöffnet. Die Profile werden durch Einarbeiten von Schlitzen in die Blechschale mit einem anschließenden Umbiegen der geschlitzten Bereiche gebildet. Die umgebogenen Bereiche greifen ineinander, wodurch der Gasstrom zweimal umgelenkt wird, bevor er durch den Trägheitsabscheider hindurch gelangt ist. Durch dieses zweimalige Umlenken des Gasstromes werden die in dem Gasstrom mitgeführten Tropfen oder Feststoffpartikel durch die Fliehkraft gegen das Profil geschleudert. Auf der Innenseite des Profils bildet sich dadurch ein Flüssigkeitsfilm, welcher langsam nach unten abläuft und in eine Sammelrinne gelangt.

Ähnliche Trägheitsabscheider sind auch aus dem Dokument EP 0 615 098 bekannt.

Durch das Umbiegen der geschlitzten Bereiche entstehen Übergangszonen, in welchen keine ausreichende Umlenkung des Gasstromes zwischen den Profilen erreicht wird. Dadurch können bei dieser Ausführung Verunreinigungen durch den Trägheitsabscheider hindurch geschleppt werden, was die Effizienz des Trägheitsabscheiders nachteilig beelnflusst.

Aufgabe der Erfindung ist die Schaffung eines Trägheitsabscheiders, welcher zuverlässig die Verunreinigungen aus einem Gasstrom entfernt. Diese Aufgabe wird durch die Merkmale des Patentanspruches 1 gelöst.

### Vorteile der Erfindung

Der erfindungsgemäße Trägheitsabscheider ist in vorteilhafter Weise geeignet, Verunreinigungen, wie z.B. Staub oder Flüssigkeitstropfen aus einem Gasstrom zu entfernen. Hierzu verfügt der Trägheitsabscheider über ein Gehäuse mit einem Einlass durch welchen das zu reinigende Gas in den Trägheitsabscheider eintritt und einem Auslass, durch welchen das gereinigte Gas austritt. Der Einlass kann unterschiedlichste Querschnitte, wie z.B. kreisförmige oder rechteckige Querschnitte, aufweisen. Der Auslass kann analog zu dem Einlass ebenfalls beliebige Querschnitte aufweisen, wobei die Querschnitte des Einlasses und des Auslasses sich nicht unbedingt entsprechen müssen. Der Einlass kann z.B. als kreisförmige Bohrung ausgeführt sein und der Auslass z.B. als rechteckiges Fenster. Bei anderen Varianten können sich der Einlass und der Auslass sowohl in der Querschnittsfläche als auch in der Querschnittsform entsprechen.

Zwischen dem Einlass und dem Auslass sind Abscheidelamellen in dem Gehäuse angeordnet, welche bogenförmig ausgebildet sind. Durch die Bogenform weisen die Abscheidelamellen eine konkave Seite und eine konvexe Seite auf. Die Abscheidelamellen können z.B. auch eine Wellenform mit mehreren Wendepunkten aufweisen. Zur Reduzierung des Bauteilgewichtes können die Abscheidelamellen z.B. aus Kunststoff bestehen, wobei selbstverständlich auch andere Werkstoffe wie z.B. Metalle zur Herstellung der Abscheidelamellen verwendet werden können. Die Wahl des Werkstoffes für die Abscheidelamellen ist in Abhängigkeit der geforderten Werkstoffeigenschaften bzw. der Umgebungsbedingungen zu treffen. Bei hohen Temperaturen sind metallische Werkstoffe geeigneter und bei geringen thermischen Belastungen können aus Kostengründen Kunststoffe bevorzugt werden.

Der Trägheitsabscheider verfügt über mindestens zwei erste Abscheidelamellen, welche mit einem Abstand linear nebeneinander angeordnet sind. Durch diesen Abstand wird ein Spalt zwischen den ersten Abscheidelamellen erzeugt, welche mit ihrer konvexen Seite dem Einlass zugewandt angeordnet sind. Versetzt zu den linear angeordneten ersten Abscheidelamellen sind zweite, ebenfalls linear angeordnete Abscheidelamellen vorgesehen, welche mit ihren konkaven Seiten den konkaven Seiten der ersten Abscheidelamellen gegenüberliegend angeordnet sind. An den Abscheidelamellen ist eine Ablaufschräge angeordnet, an welcher die abgeschiedenen Verunreinigungen ablaufen können. Hierbei verbindet eine einzige Ablaufschräge alle ersten bzw. zweiten Abscheidelamellen oder alle ersten und zweiten Abscheidelamellen. Diese Ablaufschräge verläuft vorzugsweise in einem Winkel zwischen 0° und 90° bezogen auf den Einlass. Durch die Ablaufschräge gleiten die abgeschiedenen Verunreinigungen nach unten weg, wodurch sie nicht mehr durch den Trägheitsabscheider hindurch getragen werden können. Weiterhin verhindert die Ablaufschräge, dass ein Leckluftstrom an den Abscheidelamellen vorbeiströmt. Von der Ablaufschräge aus können die Verunreinigungen wie z.B. Öl wieder auf die Rohölseite geleitet werden und stehen somit dem Ölkreislauf wieder zur Verfügung. Andere Verunreinigungen wie z.B. Staub werden, wenn sie in keinen Kreislauf zurückgeführt werden sollen, in z.B. einen Abfallbehälter befördert, welcher bei Bedarf entleert wird. Um ein besseres Abgleiten der Verunreinigungen von der Ablaufschräge zu erzielen, kann diese über eine Oberflächenstruktur verfügen, welche die Verunreinigungen zusammen führt. Durch die Zusammenführung der Verunreinigungen gleiten diese schneller ab. Hierbei kann die Oberflächenstruktur z.B. über Vertiefungen oder Rillen verfügen, welche z.B. parallel oder in einem beliebigen Winkel zur Einströmrichtung des Gases angeordnet sind.

Das durch den Einlass einströmende Gas wird durch die konvexen Seiten der Abscheidelamellen in den Spalt zwischen den ersten Abscheidelamellen geleitet. Durch den Spalt wird der Gasstrom "gebündelt" und trifft mittig auf die konkave Seite der zweiten Abscheidelamellen auf. Beim Aufprall des Gasstromes auf die zweiten Abscheidelamellen werden die Verunreinigungen gegen die Abscheidelamellen geschleudert, wo tropfenförmige Verunreinigungen anhaften und abfließen. Staubförmige Verunreinigungen fallen ebenfalls nach unten. Der Gasstrom wird durch die konkave Seite aufgeteilt und erneut umgelenkt. Die Umlenkung des Gasstromes erfolgt im Bereich der größten Beschleunigung, wodurch die Verunreinigungen durch die Fliehkraft gegen die Abscheidelamellen gedrückt werden. Nach dieser ersten Umlenkung wird der Gasstrom zurück auf die ersten Abscheidelamellen gelenkt, wo er auf die konkave Seite der ersten Abscheidelamellen auftrifft. Auf diesen ersten Abscheidelamellen werden die in dem Gasstrom verbleibenden Verunreinigungen abgeschieden. Der Gasstrom wird durch die konkave Seite der ersten Abscheidelamellen erneut umgelenkt und "gebündelt" anschließend kann das gereinigte Gas durch den Auslass aus dem Trägheitsabscheider austreten.

Je nachdem wie rein das Gas nach dem Abscheiden der Verunreinigungen sein soll, können mehrere Reihen von Abscheidelamellen hintereinander vorgesehen sein. Je reiner das durch den Auslass austretende Gas sein soll, desto mehr Reihen von Abscheidelamellen sind hintereinander anzuordnen. Weiterhin kann der Reinheitsgrad des Gases auch über die Größe des Spaltes zwischen den Abscheidelamellen reguliert werden. Je reiner das Gas sein soll, desto geringer ist der Spalt zu wählen. Hierbei ist zu beachten, dass der durch den Trägheitsabscheider bedingte Druckverlust mit abnehmender Spaltgröße zunimmt. Daher ist die Spaltgröße so groß wie möglich zu wählen, um das Vierhältnis Abscheidegrad zu Druckverlust zu optimieren.

Die Abscheidelamellen sind mit ihrer Wandstärke so dünn wie möglich auszuführen, wobei eine ausreichende Stabilität der Abscheidelamellen gewährleistet sein muss. Hierbei kann die Wandstärke der Abscheidelamellen von 0,1 bis 10 Millimeter betragen. Die Stabilität der Abscheidelamellen ist den Einsatzbedingungen bzw. den Belastungen, wie z.B. Einströmgeschwindigkeit des Gases, welche auf die Abscheidelamellen einwirken, anzupassen. Die Wandstärke der Abscheidelamellen ist abhängig von dem verwendeten Werkstoff. Mit höherfesten Werkstoffen können geringere Wandstärken realisiert werden als mit geringer festen Werkstoffen. Durch entsprechend dünne Abscheidelamellen kann die Baugröße und das Gewicht des Trägheitsabscheiders reduziert werden.

Bei der erfindungsgemäßen Ausgestaltung ist die Ablaufschräge an den zweiten Abscheidelamellen angeordnet. Hierbei kann die Ablaufschräge z.B. einteilig mit den Abscheidelamellen ausgeführt sein. Alternativ hierzu kann die Ablaufschräge als separates Bauteil ausgeführt und mit den zweiten Abscheidelamellen verbunden sein, wobei die Ablaufschräge lösbar mit z.B. Schrauben oder unlösbar durch z.B. Kleben an den zweiten Abscheidelamellen befestigt sein kann. Durch diese Ausgestaltung weisen die Abscheidelamellen eine einfach herzustellende Form auf, welche kostengünstig produziert werden kann.

Gemäß einer Weiterbildung der Erfindung schließt die Ablaufschräge mit den ersten Abscheidelamellen ab, wobei zwischen der Ablaufschräge und den ersten Abscheidelamellen ein kleiner Zwischenraum vorhanden ist, durch welchen die abgeschiedenen Verunreinigungen abfließen können. Durch die unterhalb der ersten Abscheidelamellen angeordnete Ablaufschräge können die abgeschiedenen Verunreinigungen der ersten und der zweiten Abscheidelamellen über dieselbe Ablaufschräge entfernt werden. Weiterhin wird durch diese Ablaufschräge verhindert, dass ein Teil des Gasstromes die Abscheidelamellen umgeht und ungereinigt durch den Auslass entweichen kann.

Es ist vorteilhaft, dass an der Ablaufschräge eine Tropfnase angeordnet ist, wodurch die Verunreinigungen besser in einen Sammelraum abfließen können. Diese Tropfnase ist derart ausgestaltet, dass sie sich nach unten hin verjüngt, wodurch das Ablösen der einzelnen Tropfen am unteren Ende der Tropfnase begünstigt wird.

Eine weitere Ausgestaltung der Erfindung sieht vor, dass die Abscheidelamellen in einem Winkel zwischen 90° und 180° bezogen auf den Einlass angeordnet sind. Durch diese Anordnung prallt das einströmende Gas zuerst auf die ersten Abscheidelamellen und muss an diesen entlang strömen, wobei bereits erste Verunreinigungen abgeschieden werden. Durch diese Anordnung der Abscheidelamellen wird der Gasstrom außerdem "sanft" umgelenkt, wodurch extreme Turbulenzen verhindert werden.

Es ist vorteilhaft, dass die Abscheidelamellen in ihren seitlichen Endbereichen, welche den Abschluss der Bogenform entlang der vertikalen Kante bilden, strömungsoptimiert ausgeführt sind. Dadurch wird verhindert, dass sich das Gas von den Abscheidelamellen ablöst und der durch die Abscheidelamellen verursachte Druckverlust wird minimiert. Die strömungsoptimierten Endbereiche können z.B. als Rundungen oder Spitzen ausgebildet sein. Bei einer Ausführung der Endbereiche als Spitzen, verjüngt sich die Wandstärke der Abscheidelamellen stetig, bis kein Material mehr vorhanden ist. Somit ist an den Endbereichen keine Fläche mehr vorhanden, an welcher die Verunreinigungen anhaften können.

Bei besonderen Ausgestaltungen der Erfindung sind die Abscheidelamellen als Kreissegmente, insbesondere als ¼ bis ¾ Kreissegmente ausgeführt. Diese Kreissegmente sind einfach herstellbar und weisen außerdem einen kontinuierlichen Bogenverlauf ohne Wendepunkte auf, wodurch der Druckverlust in dem Trägheitsabscheider reduziert wird. Die ersten Abscheidelamellen können in einer beliebigen Entfernung zu den zweiten Abscheidelamellen angeordnet sein, wobei sie auch teilweise ineinander greifen können. Je näher die Abscheidelamellen zueinander angeordnet sind, desto größer ist der Abscheidegrad für die Verunreinigungen.

Gemäß einer Weiterbildung der Erfindung ist in dem Gehäuse ein verschließbarer Flüssigkeitsablauf vorgesehen, welcher unterhalb der Abscheidelamellen angeordnet ist. Durch diesen Flüssigkeitsablauf kann aus dem Gasstrom abgeschiedene Flüssigkeit wieder zurück in einen Flüssigkeitsbehälter befördert oder aus dem System entsorgt werden.

An diesem Flüssigkeitsablauf kann ein Ventil angeordnet sein, welches bei Bedarf geöffnet werden kann. Hierbei kann eine automatisierte Öffnung mittel einer Steuerung bzw. Regelung oder eine manuelle Öffnung durch einen Monteur erfolgen. Vorteilhafter Weise ist der Flüssigkeitsablauf an der tiefsten Stelle in einem Sammelraum für die abgeschiedenen Verunreinigungen angeordnet. Dadurch sammeln sich die Verunreinigungen über dem Flüssigkeitsablauf und der Sammelraum kann bestmöglich entleert werden. Wenn nur trockene Partikel aus dem Gasstrom abgeschieden werden, so können diese selbstverständlich durch den Flüssigkeitsablauf entfernt werden, wobei der Flüssigkeitsablauf dann ein Staubausträger ist.

Ein Ölmodul für eine Brennkraftmaschine verfügt über eine Rohölseite mit einem Rohöleinlass und eine Reinölseite mit einem Reinölauslass. Zwischen dem Rohöleinlass und dem Reinölauslass ist ein Ölfilterelement angeordnet, welches die Rohölseite von der Reinölseite dichtend trennt und Verunreinigungen aus dem Öl ausfiltert. Dieses Ölmodul weist ein Eintrittsfenster für Kurbelgehäusegas auf, wobei das Kurbelgehäusegas durch einen oben beschriebenen Trägheitsabscheider geleitet und entölt wird. Das entölte Gas tritt durch einen Gasauslass aus dem Ölmodul aus. Das abgeschiedene Öl wird der Rohölseite zugeführt und gelangt somit wieder in den Ölkreislauf.

Eine Zylinderkopfhaube zur Abdeckung eines Zylinderkopfes für eine Brennkraftmaschine weist einen Gaseinlassanschluss und einen Gasauslassanschluss auf. Zwischen dem Gaseinlassanschluss und dem Gasauslassanschluss ist ein oben beschriebener Trägheitsabscheider angeordnet. Durch eine Anordnung des Trägheitsabscheiders an der Zylinderkopfhaube können Bauräume, welche konstruktionsbedingt ungenutzt bleiben müssten, zur Abscheidung von Verunreinigungen aus einem Gas genutzt werden. Somit könnten verunreinigte Gasströme, welche in einem motomahen Bereich anfallen, auf kürzesten Wegen gereinigt und dem Kreislauf wieder zugeführt werden. Hierbei stellt die Reinigung eines Kurbelgehäusegases eine vorteilhafte Anwendung des in die Zylinder kopfhaube integrierten Trägheitsabscheiders dar.

Bei einer weiteren Ausgestaltung ist dem Trägheitsabscheider noch mindestens ein Zyklonabscheider nachgeordnet, in welchem das bereits durch den Trägheitsabscheider vorgereinigte Gas erneut gereinigt wird. Durch die Kombination der beiden Abscheidevorrichtungen wird das Gas optimal von Verunreinigungen befreit.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: einen Trägheitsabscheider im Schnitt,
- Figur 2: einen Trägheitsabscheider im Schnitt,
- Figur 3: einen Trägheitsabscheider im Schnitt,
- Figur 4: einen Trägheitsabscheider im Schnitt,
- Figur 5: zweite Abscheidelamellen mit ihrer Ablaufschräge,
- Figur 6: eine Prinzipskizze eines Strömungsverlaufes,
- Figur 7: eine Prinzipskizze eines Strömungsverlaufes.
- Figur 8: eine Prinzipskizze eines Strömungsverlaufes.

### Beschreibung der Ausführungsbeispiele

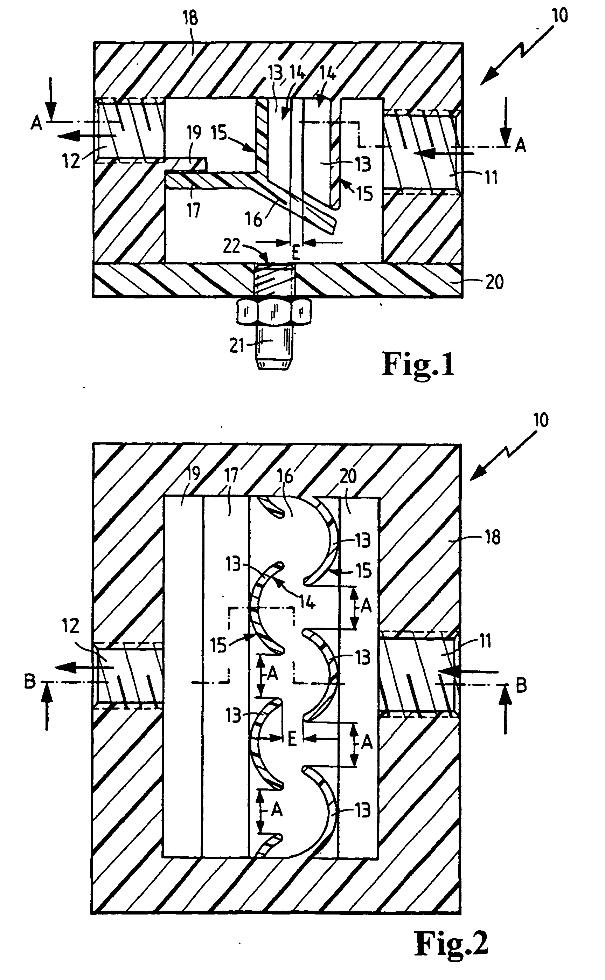

In Figur 1 ist ein Trägheitsabscheider 10 im Schnitt entlang der Schnittlinie B-B gemäß Figur 2 dargestellt. Der Trägheitsabscheider 10 verfügt über einen Einlass 11 und einen Auslass 12. Der Auslass 12 ist durch Abscheidelamellen 13, welche in zwei parallelen Reihen angeordnet sind von dem Einlass 11 getrennt. Die Abscheidelamellen 13 sind bogenförmig (siehe Figur 2) ausgeführt, wodurch sie einerseits über eine konkave Seite 14 und andererseits über eine konvexe Seite 15 verfügen. Die in Strömungsrichtung zuerst angeordneten Abscheidelamellen 13 sind mit ihrer konvexen Seite 15 dem Einlass 11 zugewandt angeordnet. Die in Strömungsrichtung nachfolgend angeordneten Abscheidelamellen 13 sind mit ihrer konkaven Seite 14 dem Einlass 11 zugewandt angeordnet. Dadurch liegen sich die konkaven Seiten 14 der beiden parallel angeordneten Reihen von Abscheidelamellen 13 gegenüber. Damit die Gasströmung mehrfach umgelenkt wird, sind die Reihen der Abscheidelamellen 13 um ca. einen halben Bogen versetzt zueinander angeordnet. Die beiden Reihen der Abscheidelamellen 13 sind in einer Entfernung E von ca. 2mm angeordnet. Bei diesem Ausführungsbeispiel ist an den, in Strömungsrichtung an zweiter Stelle angeordneten Abscheidelamellen 13 eine Ablaufschräge 16 angeordnet. Diese Ablaufschräge 16 ist einteilig mit den zweiten Abscheidelamellen 13 ausgeführt. Sie verläuft, bezogen auf den Einlass 11, in einem Winkel von ca. 30°, wobei je nachdem, welche Stoffe aus dem Gasstrom entfernt werden sollen dieser Winkel vergrößert oder verkleinert werden kann. Um die zweiten Abscheidelamellen 13 und die Ablaufschräge 16 an einem, den Trägheitsabscheider 10 bildenden Gehäuse 18 zu fixieren, ist eine Befestigungsfläche 17 vorgesehen. Das Bauteil mit den zweiten Abscheidelamellen 13 und der Ablaufschräge 16 besteht aus einem Kunststoff, welcher z.B. im Spritzgießverfahren hergestellt ist. Das Gehäuse 18 besteht ebenfalls aus Kunststoff, wobei der Einlass 11 und der Auslass 12 in dieses Gehäuse 18 integriert sind. Die Abscheidelamellen 13 und das Gehäuse 18 können selbstverständlich auch aus anderen Werkstoffen wie z.B. Metall oder Keramik bestehen. Die ersten Abscheidelamellen 13 sind einteilig mit dem Gehäuse 18 ausgeführt. Um die zweiten Abscheidelamellen 13 in einer definierten Lage zu den ersten Abscheidelamellen 13 zu fixieren, weist das Gehäuse 18 eine Anlage 19 auf. An dieser Anlage 19 ist die Befestigungsfläche 17 mit Klebstoff fixiert. Alternativ zu dieser unlösbaren Befestigung kann die Ablaufschräge auch mit lösbaren Verbindungen, wie z.B. Schrauben oder Schnappverbindungen, an der Anlage 19 befestigt werden.

Das Gehäuse 18 ist mit einer Abdeckplatte 20 dichtend verschlossen, wodurch das zu reinigende Gas nur durch den Einlass 11 einströmen bzw. durch den Auslass 12 ausströmen kann. In der Abdeckplatte 20, welche ebenfalls aus Kunststoff besteht, ist eine Ablassschraube 21 angeordnet, welche in einem Flüssigkeitsablauf 22 eingeschraubt ist. Diese Ablassschraube 21 kann bei Bedarf entfernt werden, wodurch die abgeschiedenen Verunreinigungen aus dem Trägheitsabscheider 10 entfernt werden können.

In Figur 2 ist ein Trägheitsabscheider 10 im Schnitt entlang der Schnittlinie A-A gemäß Figur 1 dargestellt. Der Figur 1 entsprechende Bauteile sind mit gleichen Bezugszeichen versehen. Die Reihe der ersten Abscheidelamellen 13 besteht aus drei nebeneinander angeordneten Abscheidelamellen 13, welche in einem Abstand A zueinander angeordnet sind. Dieser Abstand A ist sowohl bei den ersten Abscheidelamellen 13 als auch bei den zweiten Abscheidelamellen 13 gleich.

Das zu reinigende Gas strömt durch den Einlass 11 in den Trägheitsabscheider 10 ein. Es prallt auf die Reihe der ersten Abscheidelamellen13, wo es derart umgelenkt wird, dass es durch die Abstände A zwischen den ersten Abscheidelamellen 13 hindurch strömen muss. Da in Strömungsrichtung hinter den Abständen A die zweiten Abscheidelamellen 13 angeordnet sind, kann das Gas nicht direkt zu den Auslass 12 strömen. Die zweiten Abscheidelamellen 13 sind derart angeordnet, dass der tiefste Bereich der konkaven Seite 14 direkt hinter dem Abstand A angeordnet ist. Es wird durch die konkave Seite 14 der zweiten Abscheidelamellen 13 erneut umgelenkt, wobei ein Teil der Verunreinigungen gegen die Abscheidelamellen 13 prallt und nicht mehr mit der Gasströmung weggetragen wird. Diese abgeschiedenen Verunreinigungen fließen nach unten in Richtung der Ablaufschräge 16. Der durch die konkave Seite 14 der zweiten Abscheidelamellen 13 umgelenkte Gasstrom trifft auf die konkave Seite 14 der ersten Abscheidelamellen 13 auf, wo ein weiterer Teil der Verunreinigungen aus dem Gasstrom abgeschieden wird. Auch diese Verunreinigungen fließen nach unten in Richtung der Ablaufschräge 16. Durch die konkave Seite 14 der ersten Abscheidelamellen 13 wird der Gasstrom erneut umgelenkt, wodurch er in Richtung Auslass 12 geleitet wird und das gereinigte Gas aus dem Trägheitsabscheider 10 austreten kann.

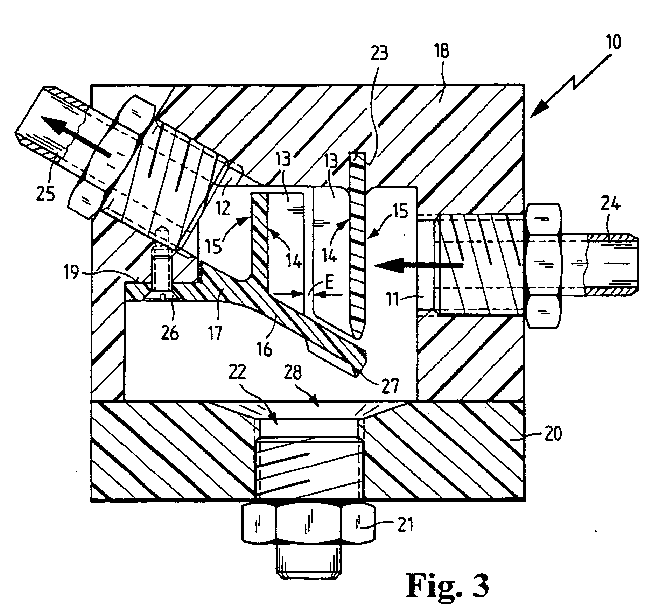

In Figur 3 ist eine Variante eines Trägheitsabscheiders 10 im Schnitt entlang der Schnittlinie B-B gemäß Figur 2 dargestellt. Der Figur 1 entsprechende Bauteile sind mit gleichen Bezugszeichen versehen. Bei dieser Variante, welche im wesentlichen der Figur 1 entspricht, sind die ersten Abscheidelamellen 13 zweiteilig mit dem Gehäuse 18 ausgeführt.

Hierbei weist das Gehäuse 18 eine Aufnahme 23 auf, in welche die ersten Abscheidelamellen 13 eingeklebt sind. Die ersten Abscheidelamellen 13 können hierbei einzeln, d.h. jede Abscheidelamelle 13 für sich oder mit einer Schiene (nicht dargestellt), d.h. alle ersten Abscheidelamellen 13 sind mit der Schiene (nicht dargestellt) verbunden, an dem Gehäuse befestigt. Bei dieser Ausführung kann das Gehäuse 18 aus einem anderen Material bestehen als die Abscheidelamellen 13. Selbstverständlich können auch die zweiten Abscheidelamellen 13 auf die gleiche Art mit dem Gehäuse 18 verbunden werden , wie die ersten Abscheidelamellen 13.

Der Auslass 12 ist bei diesem Ausführungsbeispiel in einem 30° Winkel zu dem Einlass 11 angeordnet. In dem Einlass 11 ist ein Einlassanschlussstück 24 und in dem Auslass 12 ist ein Auslassanschlussstück 25 angeordnet. Beide Anschlussstücke 24,25 können mit Gasleitungen (nicht dargestellt) verbunden werden.

Die zweiten Abscheidelamellen 13 sind bei diesem Ausführungsbeispiel mit Schrauben 26, welche durch die Befestigungsfläche 17 hindurchragen mit dem Gehäuse 18 verbunden.

An der Ablaufschräge 16, welche parallel zu dem Auslass 12 angeordnet ist, ist bei diesem Ausführungsbeispiel eine Tropfnase 27 angeordnet. Diese Tropfnase 27 schließt die Ablaufschräge 16 ab, wobei sie sich nach unten hin verjüngt. Durch den sich verjüngenden Teil lösen sich die aus dem Gasstrom abgeschiedenen Verunreinigungen besser ab und tropfen auf die Abdeckplatte 20, welche über eine Vertiefung 28 verfügt. Die Vertiefung 28 ist derart gestaltet, dass die Verunreinigungen in den Flüssigkeitsablauf 22 flie-βen. Die Ablassschraube 21 wird bei Bedarf herausgeschraubt, wodurch die abgeschiedene Flüssigkeit ablaufen kann.

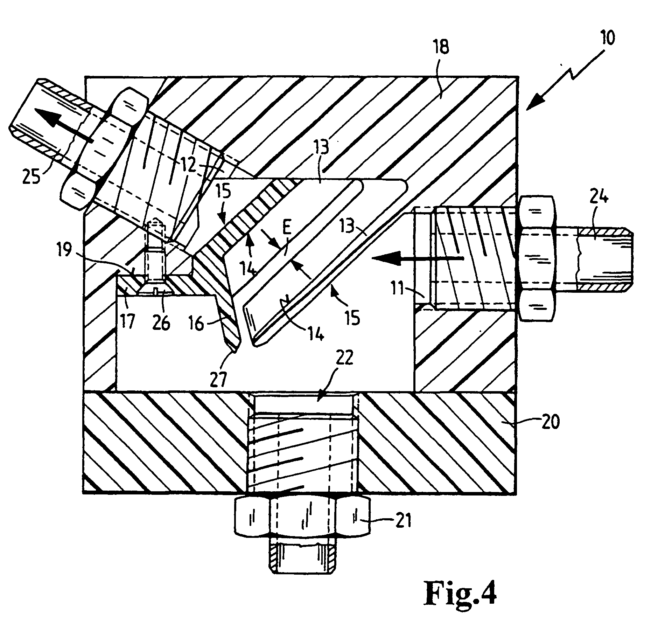

In Figur 4 ist ein Trägheitsabscheider 10 in einer Variante im Schnitt dargestellt. Der Figur 3 entsprechende Bauteile sind mit gleichen Bezugszeichen versehen. Bei dieser Variante ist der Auslass 12 analog zu Figur 3 im 30° Winkel zu dem Einlass 11 angeordnet. Die Abdeckplatte 20 weist jedoch keine Vertiefung 28 auf.

Die Abscheidelamellen 13 sind bei dieser Ausführung in einem Winkel von 45°, bezogen auf den Einlass 11, angeordnet. Die Ablaufschräge 16 verläuft in einem Winkel von ca. 80° zu dem Einlass 11. An ihrem unteren Ende verfügt sie über die Tropfkante 27, welche das Abtropfen der abgeschiedenen Flüssigkeit ermöglicht.

Das von Verunreinigungen zu reinigende Gas tritt durch den Einlass 11 in den Trägheitsabscheider 10 ein. Es trifft auf die schräg verlaufenden Abscheidelamellen 13, wo sich bereits erste Verunreinigungen abscheiden. Anschließend wird das Gas durch die Abscheidelamellen 13 mehrfach umgelenkt, wodurch sich weitere Verunreinigungen abscheiden. Das so gereinigte Gas tritt durch den Auslass 12 wieder aus dem Trägheitsabscheider aus. Die abgeschiedenen Verunreinigungen fließen entlang der Abscheidelamellen 13 bzw. der Ablaufschräge 16 in Richtung Flüssigkeitsablauf 22. In den Flüssigkeitsablauf 22 ist die Ablassschraube 21 eingeschraubt. Die Ablassschraube 21 ist als Anschlussstück ausgebildet, welches mit einem Schlauch (nicht dargestellt) verbunden sein kann, wodurch die abgeschiedene Flüssigkeit kontinuierlich aus dem Inneren des Trägheitsabscheiders 10 ausgetragen werden kann.

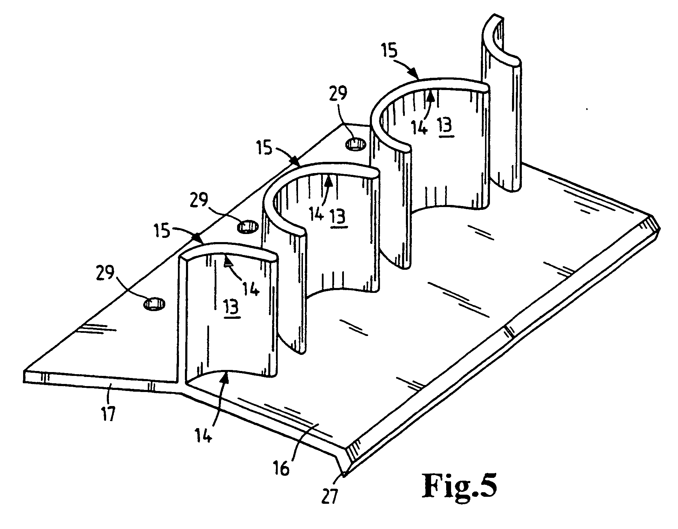

In Figur 5 sind zweite Abscheidelamellen 13 mit ihrer Ablaufschräge 16 gemäß Figur 3 in perspektivischer Ansicht dargestellt. Der Figur 3 entsprechende Bauteile sind mit gleichen Bezugszeichen versehen. Die Abscheidelamellen 13 sind einteilig mit der Ablaufschräge 16 und der Befestigungsfläche 17 ausgeführt. In der Befestigungsfläche 17 sind drei Befestigungsbohrungen 29 angeordnet, durch welche Schrauben 26 (siehe Fig. 3) hindurch gesteckt und mit dem Gehäuse 18 (siehe Fig. 3) verschraubt werden können.

In Figur 6 ist eine Prinzipskizze eines Strömungsverlaufes durch die Abscheidelamellen 13 dargestellt. Der Figur 2 entsprechende Bauteile sind mit gleichen Bezugszeichen versehen. Bei dieser Ausführung sind die ersten und zweiten Abscheidelamellen 13 als ¾ Kreisbogen ausgeführt, wobei die Kreisbögen teilweise ineinander greifen. Die Entfernung E der ersten und zweiten Abscheidelamellen 13 zueinander weist durch das Ineinandergreifen der Abscheidelamellen 13 ein negatives Vorzeichen auf. Der Betrag der Entfernung E, also wie weit sich die ersten und zweiten Abscheidelamellen 13 überdecken, kann entsprechend der abzuscheidenden Verunreinigungen ausgelegt werden. Der Abstand A zwischen den Abscheidelamellen 13 einer Reihe kann ebenfalls von wenigen Millimetern bis einigen Zentimetern betragen, er ist entsprechend der abzuscheidenden Verunreinigungen auszulegen.

Das zu reinigende Gas strömt entlang der Pfeile senkrecht auf die ersten Abscheidelamellen 13. Durch die Abscheidelamellen 13 wird der Gasstrom bogenförmig umgelenkt und muss durch den Abstand A zwischen den nebeneinander angeordneten Abscheidelamellen 13 hindurchströmen. Durch die geringe Querschnittsfläche zwischen den ersten Abscheidelamellen 13 wird der Gasstrom beschleunigt und trifft mit maximaler Geschwindigkeit auf die konkave Seite 14 der zweiten Abscheidelamellen 13 auf. Durch die Bogenform der zweiten Abscheidelamellen 13 wird die Gasströmung umgelenkt und trifft auf die konkave Seite 14 der ersten Abscheidelamellen 13 auf. Dort wird der Gasstrom erneut umgelenkt und durch den Abstand A zwischen den zweiten Lamellen hindurch zu dem Auslass (nicht dargestellt) geleitet.

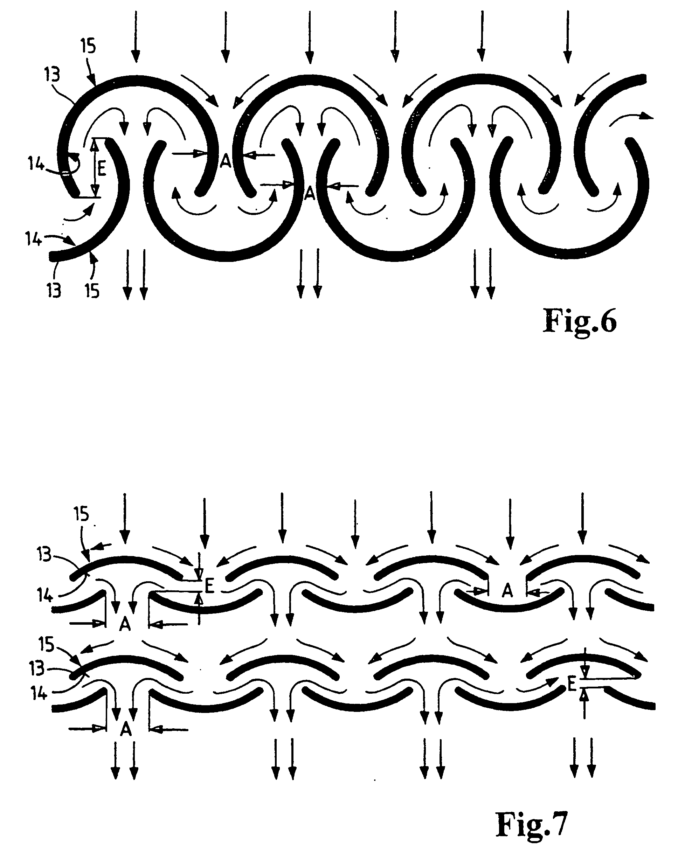

In Figur 7 ist eine Prinzipskizze eines alternativen Strömungsverlaufes durch die Abscheidelamellen 13 dargestellt. Der Figur 6 entsprechende Bauteile sind mit gleichen Bezugszeichen versehen. Bei dieser Alternative sind die Abscheidelamellen 13 als ¼ Bogen ausgeführt. Weiterhin sind vier parallel angeordnete Abscheidelamellen 13 vorgesehen, welche als zwei hintereinander angeordnete Paare von Abscheidelamellen 13 gemäß Figur 6 aufgebaut sind. Hierbei folgen in Strömungsrichtung gesehen erste Abscheidelamellen 13, dann zweite Abscheidelamellen 13. In Strömungsrichtung hinter den zweiten Abscheidelamellen 13 sind dritte Abscheidelamellen 13 angeordnet, welche in ihrer Ausrichtung den ersten Abscheidelamellen 13 entsprechen. Die vierten Abscheidelamellen 13 entsprechen den zweiten Abscheidelamellen 13. Die Entfernung E der ersten und zweiten Abscheidelamellen 13 zueinander beträgt 2mm, wodurch der Gasstrom weniger stark umgelenkt wird. Dadurch ist ein geringerer Druckverlust durch die Abscheidelamellen 13 zu erzielen.

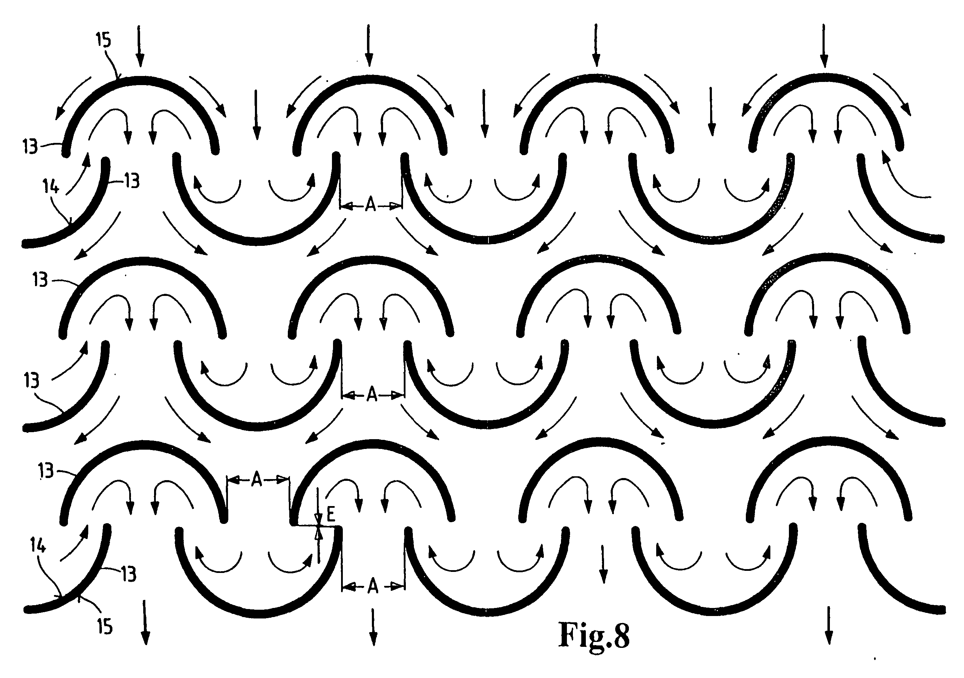

In Figur 8 ist eine Prinzipskizze eines alternativen Strömungsverlaufes durch die Abscheidelamellen 13 dargestellt. Der Figur 6 entsprechende Bauteile sind mit gleichen Bezugszeichen versehen. Bei dieser Alternative sind die Abscheidelamellen 13 halbkreisförmig ausgeführt. Die Entfernung E der Abscheidelamellen voneinander ist gleich null. Der Abstand A zwischen den Abscheidelamellen 13 einer Reihe beträgt ca. 20mm. Bei diesem Abstand A verursacht der Trägheitsabscheider 10 (gemäß einer der Figuren 1 bis 4) einen geringeren Druckverlust, als bei dem Abstand A der Figur 6.

Bei der in Figur 8 beschriebenen Alternative sind die Abscheidelamellen 13 in 6 Reihen parallel zueinander angeordnet, wobei immer zwei Reihen sich mit ihrer konkaven Seite 14 gegenüberliegen. Dadurch wird der Abscheidebereich durch drei paarweise angeordnete Abscheidelamellen 13 erzeugt. Dieser dreifache Abscheidebereich weist einen höheren Abscheidegrad auf, als ein durch zwei Abscheidelamellen 13 gebildeter Abscheidebereich.

## Patentansprüche

1. Trägheitsabscheider (10), zur Abscheidung von Tropfen aus Kurbelgehäusegasen, aufweisend einen Einlass (11) und einen Auslass (12),
- wobei zwischen dem Einlass (11) und dem Auslass (12) Abscheidelamellen (13) angeordnet sind, welche bogenförmig ausgebildet sind, wodurch sie eine konkave Seite (14) und eine konvexe Seite (15) aufweisen,
- wobei mindestens zwei erste Abscheidelamellen (13) mit einem Abstand A linear nebeneinander angeordnet sind und die konvexen Seiten (15) dem Einlass (11) zugewandt angeordnet sind,
- wobei versetzt zu den linear angeordneten ersten Abscheidelamellen (13) zweite Abscheidelamellen (13) angeordnet sind, welche mit ihren konkaven Seiten (14) den konkaven Seiten (14) der ersten Abscheidelamellen (13) gegenüberliegend angeordnet sind,
**dadurch gekennzeichnet, dass**
an den zweiten Abscheidelamellen (13) eine einzige ebene flächige Ablaufschräge (16) für die abgeschiedenen Verunreinigungen angeordnet ist, wobei die Ablaufschräge (16) die zweiten Abscheidelamellen (13) verbindet, und wobei die Ablaufschräge (16) über eine Oberflächenstruktur verfügt, wobei die Oberflächenstruktur durch Vertiefungen oder Rillen gebildet ist.

2. Trägheitsabscheider (10) nach Anspruch 1, **dadurch gekennzeichnet, dass** die Ablaufschräge (16) an den zweiten Abscheidelamellen (13) angeordnet ist und mit den ersten Abscheidelamellen (13) abschließt.

3. Trägheitsabscheider (10) nach einem der Ansprüche 1 oder 2, **dadurch gekennzeichnet, dass** an der Ablaufschräge (16) eine Tropfnase (27) angeordnet ist.

4. Trägheitsabscheider (10) nach einem der vorangehenden Ansprüche, **dadurch gekennzeichnet, dass** die Abscheidelamellen (13) in einem Winkel zwischen 90° und 180° zu dem Einlass (11) angeordnet sind.

5. Trägheitsabscheider (10) nach einem der vorangehenden Ansprüche, **dadurch gekennzeichnet, dass** die Abscheidelamellen (13) in ihren Endbereichen strömungsoptimiert ausgeführt sind.

6. Trägheitsabscheider (10) nach einem der vorangehenden Ansprüche, **dadurch gekennzeichnet, dass** die Abscheidelamellen (13) als Kreissegmente, insbesondere alls ¼ bis ¾ Kreissegmente ausgeführt sind.

7. Trägheitsabscheider (10) nach Anspruch 6, **dadurch gekennzeichnet, dass** die Kreissegmente der Abscheidelamellen (13) teilweise ineinander greifen.

8. Trägheitsabscheider (10) nach einem der vorangehenden Ansprüche, **dadurch gekennzeichnet, dass** ein verschließbarer Flüssigkeitsablauf vorgesehen ist, welcher unterhalb der Abscheidelamellen (13) angeordnet ist.

9. Ölmodul für eine Brennkraftmaschine mit einem Eintrittsfenster für Kurbelgehäusegas, **dadurch gekennzeichnet, dass** ein Trägheitsabscheider (10) nach einem der vorangehenden Ansprüche integriert ist.

10. Zylinderkopfhaube für eine Brennkraftmaschine mit einem Gaseinlassanschluss und einem Gasauslassanschluss, **dadurch gekennzeichnet, dass** ein Trägheitsabscheider (10) nach einem der Ansprüche 1 bis 8 integriert ist.

## Claims

1. Inertia separator (10), for separation of droplets from crankcase gases, including an inlet (11) and an outlet (12),
- wherein separation lamellae (13) are disposed between the inlet (11) and the outlet (12), said separation lamellae being formed in an arcuate manner and thereby including one concave side (14) and one convex side (15),
- wherein at least two first separation lamellae (13) are disposed linearly next to one another at a spacing A and the convex sides (15) are disposed facing the inlet (11),
- wherein second separation lamellae are disposed offset relative to the linearly disposed first separation lamellae (13), said second separation lamellae being disposed with their concave sides (14) situated opposite the concave sides (14) of the first separation lamellae (13)
**characterised in that** one single plane, flat drainage slope (16) for the separated impurities is disposed on the second separation lamellae (13), wherein the drainage slope (16) connects the second separation lamellae (13), and wherein the drainage slope (16) has a surface structure, wherein the surface structure is formed by grooves or channels.

2. Inertia separator (10) according to claim 1, **characterised in that** the drainage slope (16) is disposed on the second separation lamellae (13) and terminates with the first separation lamellae (13).

3. Inertia separator (10) according to one of claims 1 or 2, **characterised in that** a drip spout (27) is disposed on the drainage slope (16).

4. Inertia separator 10) according to one of the preceding claims, **characterised in that** the separation lamellae (13) are disposed at an angle of between 90° and 180° relative to the inlet (11).

5. Inertia separator (10) according to one of the preceding claims, **characterised in that** the separation lamellae (13) are designed for optimum flow in their edge regions.

6. Inertia separator (10) according to one of the preceding claims, **characterised in that** the separation lamellae (13) are in the form of circular segments, more especially corresponding to the form of ¼ to ¾ of a circle.

7. Inertia separator (10) according to claim 6, **characterised in that** the circular segments of the separating lamellae (13) partially interlock.

8. Inertial separator (10) according to one of the preceding claims, **characterised in that** there is provided a closable liquid drain which is disposed undemeath the separation lamellae (13).

9. Oil module for an internal combustion engine having an inlet aperture for crankcase gas, **characterised in that** an inertia separator (10) according to one of the preceding claims is incorporated.

10. Cylinder head cover for an internal combustion engine having a gas inlet connection and a gas outlet connection, **characterised in that** an inertia separator (10) according to one of claims 1 to 8 is incorporated.

## Revendications

1. Séparateur à inertie (10) pour séparer des gouttes de gaz de carter de vilebrequin, comprenant une entrée (11) et une sortie (12), dans lequel
- des lamelles de séparation (13) sont disposées entre l'entrée (11) et la sortie (12) formées en arc de telle sorte qu'elles présentent une face concave (14) et une face convexe (15),
- au moins deux premières lamelles de séparation (13) sont juxtaposées de façon linéaire à une distance A et les faces convexes (15) sont disposées en regard de l'entrée (11),
- des secondes lamelles de séparation (13) sont disposées de façon décalée par rapport aux premières lamelles de séparation (13) disposées de façon linéaire, et leurs faces concaves (14) se situent en regard des faces concaves (14) des premières lamelles de séparation (13),
**caractérisé en ce qu'**
au niveau des secondes lamelles de séparation (13) une seule surface d'écoulement inclinée plane (16) est disposée pour les salissures séparées, elle relie les secondes lamelles de séparation (13) et présente une structure superficielle formée par des creux ou des rainures.

2. Séparateur à inertie (10) selon la revendication 1,
**caractérisé en ce que**
la surface d'écoulement inclinée (16) est disposée au niveau des secondes lamelles de séparation (13) et se termine au niveau des premières lamelles de séparation (13).

3. Séparateur à inertie (10) selon l'une quelconque des revendications 1 ou 2,
**caractérisé en ce qu'**
un bec d'égouttage (27) est disposé au niveau de la surface d'écoulement inclinée (16).

4. Séparateur à inertie (10) selon l'une quelconque des revendications précédentes,
**caractérisé en ce que**
les lamelles de séparation (13) sont disposées selon un angle compris entre 90° et 180° par rapport à l'entrée (11).

5. Séparateur à inertie (10) selon l'une quelconque des revendications précédentes,
**caractérisé en ce que**
les lamelles de séparation (13) présentent une forme optimisée pour l'écoulement au niveau de leurs zones terminales.

6. Séparateur à inertie (10) selon l'une quelconque des revendications précédentes,
**caractérisé en ce que**
les lamelles de séparation (13) présentent la forme de segments de cercle, en particulier de segments de ¼ à ¾ de cercle.

7. Séparateur à inertie (10) selon la revendication 6,
**caractérisé en ce que**
les segments de cercle des lamelles de séparation (13) s'engrènent en partie les uns dans les autres.

8. Séparateur à inertie (10) selon l'une quelconque des revendications précédentes,
**caractérisé en ce qu'**
une évacuation de liquide pouvant être fermée est prévue, elle est disposée en dessous des lamelles de séparation (13).

9. Module à huile pour un moteur à combustion interne avec une fenêtre d'admission pour des gaz de carter de vilebrequin,
**caractérisé en ce qu'**
un séparateur à inertie (10) est intégré selon l'une quelconque des revendications précédentes.

10. Capot de tête de cylindre pour un moteur à combustion interne avec un raccord d'admission de gaz et un raccord d'échappement de gaz,
**caractérisé en ce qu'**
un séparateur à inertie (10) est intégré selon l'une quelconque des revendications 1 à 8.
